# EUROPEAN PATENT APPLICATION

(11) **EP 1 270 399 A1**
(43) Date of publication of application: **02.01.2003**
(21) Application number: 02077483.2
(22) Date of filing: 18.06.2002
(51) Int. Cl.: B63B 35/00, G01N 27/04

(54) **A vessel comprising a washing space and a method for desalinating sand**

(30) Priority: 19.06.2001 NL 1018327
(71) Applicant: Ballast Nedam Infra B.V., 3430 BM Nieuwegein (NL)
(72) Inventor: Stet, Johannes Cornelis, 3430 BM Nieuwegein (NL); Bos, Wilhelmus Johannes, 3430 BM Nieuwegein (NL)
(74) Representative: Vernout, Robert

(57) **Abstract**

A vessel comprising a washing space in which sand, for example sea sand or another type of soil can be washed with washing water, for example sea water or river water, which vessel is provided with a pair of electrodes, which are connected to a resistance measuring device, in such a manner that the electrical resistance of the washing water and/or of the sand/washing water mixture can be measured so as to determine the salt content of the sand.

## Description

The invention relates to a vessel comprising a washing space in which sand and/or another type of soil can be washed with washing water. More in particular, a sea-going vessel is concerned, which is arranged for desalinating extracted sea sand by washing the sea sand with sea water, brackish water or fresh water or a successive combination thereof.

Such a vessel is known. Sea sand is increasingly being used for building activities or for covering surfaces on shore. Sea sand contains a large amount of salt, however, which has a negative influence on the vegetation and on any buildings that are constructed on and in the sand. Consequently it is therefore necessary to desalinate the sand, so that sand containing an acceptably low amount of salt is obtained. This is achieved by mixing the sand with water, for example by spouting sea or river water on the sand in the washing space and having said water move down through the sand under the influence of the force of gravity, and subsequently pumping out the water near the bottom. In this way, the salt is filtered from the sea sand to a large extent. It has become apparent that even if this process is carried out by means of salt water, a significant part of the salt is nevertheless washed out of the sand. The desired salt content may be obtained by rewashing with fresh water or with brackish water.

With the method that has been used so far, the salt content of the sand is determined after the predetermined washing period by means of samples taken by laboratory assistants. In some cases it appears thereby that the desired salt content has not been obtained yet, after which rewashing for some time is necessary. In some cases it furthermore appears that the desired salt content has long been achieved already, so that washing has taken place unnecessarily long. In order to obtain an optimally correct picture of the salt content, several samples must be taken during the washing process, therefore. This requires a great deal of effort on the part of the laboratory assistants, however, who need to be transferred from vessel to vessel for that purpose, which likewise requires a major logistic effort.

The object of the invention is to provide a vessel which is suitable for desalinating sea sand, in which the salt content of the sand can be determined in a simple and efficient manner at any desired moment without there being a need to take a sample from the sand, and in which the moment at which the washing process is complete can be determined with greater accuracy.

According to the invention, in order to accomplish that objective, the vessel is provided with a pair of electrodes, which are connected to a resistance measuring device, in such a manner that the electrical resistance of the washing water and/or of the sand/washing water mixture can be measured. The resistance of the washing water and/or of the sand/washing water mixture constitutes an indication for the salt content thereof, from which the salt content of the sand can subsequently be derived.

In a first preferred embodiment, the resistance of the sand/washing water mixture is measured in that the electrodes are disposed in or near the sand/washing water mixture. Preferably, the electrodes are disposed near two opposed walls of the washing space, so that the resistance of a part of the sand/washing water mixture which is as large as possible is measured, so that a reliable measurement is obtained. Preferably, the electrodes are fixed to the walls of the washing space.

Likewise preferably, several pairs of electrodes are arranged in the washing space at different locations, in particular at different levels, as a result of which an even better picture of the progress of the washing process at said various locations or levels is obtained. Preferably, the electrodes are present in vertically extending pipes, which are provided with openings through which water can pass. It has become apparent that the measurements are less reliable if the electrodes are in direct contact with the sand/washing water mixture. A more reliable measurement is obtained by placing the electrodes in pipes, in which they are screened from the sand.

In a second preferred embodiment, the resistance of the washing water is measured in that the washing space is provided with openings through which washing water can be drained, wherein the resistance of the drained washing water can be measured outside the washing space.

The invention is in particular advantageous if a display device is present in on near the wheel house of the vessel, which display device is capable of displaying the resistance measurement data and/for data derived therefrom, such as the salt content of the sand. In this way it is possible for the pilot of the vessel to gear the speed of the vessel to the progress of the washing process, for example, so that the washing process will be complete once the vessel has reached its destination. Said gearing may even take place (semi)automatically, wherein the speed of the vessel is calculated on the basis of the remaining distance and the current salt content. Said linking of the current salt content of the sea sand to the speed of the vessel can be considered to constitute a separate invention.

The invention also relates to a method for desalinating sand and/or another type of soil, in which the sand is washed with washing water in a washing space of a vessel, wherein the electrical resistance of the washing water and/or of the sand/washing water mixture is measurement by means of a pair of electrodes, which are connected to a resistance measuring device.

The invention will now be explained in more detail with reference to an embodiment as shown in the figures, in which:
Figure 1 schematically shows a vessel according to the invention; and
Figure 2 is a schematic cross-sectional view of the vessel of figure 1.

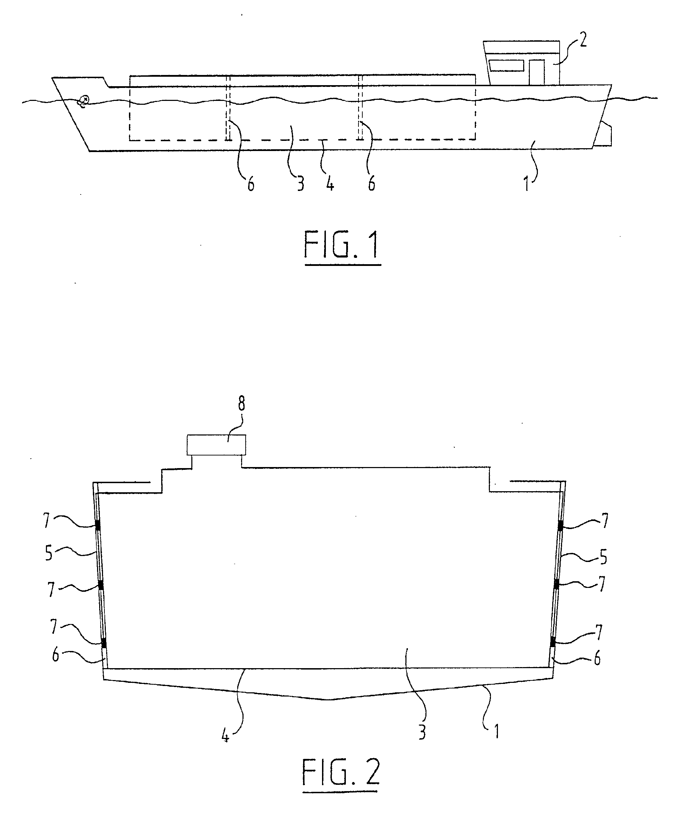

According to figure 1, a vessel 1 comprises a wheel house 2 and a washing space 3, into which sea sand which has been pumped up from the bottom of the sea is deposited at sea. Subsequently, the vessel 1 sales to the location where the sand is to be unloaded. On the way, sea water is pumped up and spouted on the sand that is present in the washing space 3. This sea water will move down through the sand to the bottom 4, where it is pumped out by means of drainage pipes and pumps (not shown). Although the sea water itself contains salt, it has become apparent in practice that it is still possible to wash a significant part of the salt out of the sand in this way. If it appears, however, that the salt content cannot be reduced to a sufficient degree in this way, rewashing takes place, using brackish water or fresh water, which can be pumped up in on near a river mouth, for example.

Currently, it is determined in advance how much sea water or brackish water or fresh water is needed in order to obtain the required salt content of the sand. If an amount of fresh water of 25 vol. % of the amount of sea sand is used, for example, experience teaches that the resulting sand will contain less than 200 mg of chloride per kilogram of dry sand, which is an acceptable result. This result may vary from case to case, however, and if sea water or brackish water is used as well, the final result is difficult to predict.

In order to gain an insight into the progress of the washing process during said process, and in order to be able to predict the remaining washing time more accurately, vertical pipes 6 are fixed to the side walls 5 of the washing space 3, in which electrodes 7 are disposed at different levels. Near the electrodes 7, the pipes 6 are provided with holes in which filters are present, which allow the washing water to pass but which keep the sand out of the pipes 6. The electrodes 7 are connected to a resistance measuring device 8, which is capable of applying a voltage of, for example, 12 V to respective pairs of opposed electrodes 7, and which is capable of measuring the current through said electrodes 7 that results from said voltage. The measured current intensity constitutes an indication of the resistance or the conductivity of the sand/washing water mixture, which information can be used, for example, to calculate the average current salt content of the sand at the level in question after drying of the sand. Preferably, the measurements at the various levels are carried out in succession, so that the measurements do not influence each other. To that end, the pairs of electrodes 7 can be independently energised.

The time at which the maximum allowable salt content is expected to be obtained can be calculated by extrapolation from the way the process is progressing. A factor that should be taken into account thereby is the fact whether sea water, brackish water or fresh water will successively be used. The advantage of carrying out measurements at different levels is that it is possible to decide to unload the upper layer, for example, when said layer has reached the maximum allowable salt content, and to continue washing the lower layers that have not yet reached said salt content at that point in time. Furthermore it can be decided to unload the entire cargo if the average salt content of all layers together reaches a value below the maximum allowable value, in which case the sand of the various layers must be properly mixed.

The relevant measuring data are displayed on a monitor in the wheel house 2. In response to the expected end time, the pilot of the vessel 1 can decide to reduce or increase the speed of the vessel 1, such that the time of arrival at the unloading site will coincide more or less with the time at which the desalination process is expected to be complete. If desired, the speed of the vessel can even be adapted to the progress of the process fully automatically by means of a control unit.

In an alternative embodiment of the invention, the resistance measurement is not carried out between two electrodes that are fixed to the walls of the washing space, but the electrodes are disposed in a discharge pipe, for example, through which the washing water is discharged. In this way, the salt content of the discharged washing water is measured, from which the salt content of the sand can be calculated in a manner comparable to the manner as described above. Furthermore, special washing water draining points may be arranged in the washing space 3, so that, for example, the salt content of the washing water can be calculated at various levels in the washing space 3, with the advantages as described above.

## Claims

1. A vessel (1) comprising a washing space (3) in which sand and/or another type of soil can be washed with washing water, **characterized in that** the vessel (1) is provided with a pair of electrodes (7), which are connected to a resistance measuring device (8), in such a manner that the electrical resistance of the washing water and/or of the sand/washing water mixture can be measured.

2. A vessel (1) according to claim 1, **characterized in that** the electrodes (7) are disposed in or near the sand/washing water mixture.

3. A vessel (1) according to claim 1 or 2, **characterized in that** the electrodes (7) are disposed near two opposed walls (5) of the washing space (3).

4. A vessel (1) according to claim 1, 2 or 3, **characterized in that** the electrodes (7) are fixed to the walls (5) of the washing space (3).

5. A vessel (1) according to any one of the preceding claims 1 - 4, **characterized in that** several pairs of electrodes (7) are arranged in the washing space (3) at different locations, in particular at different levels.

6. A vessel (1) according to any one of the preceding claims 1 - 5, **characterized in that** the electrodes (7) are present in vertically extending pipes (6), which are provided with openings through which water can pass.

7. A vessel (1) according to claim 1, wherein the washing space (3) is provided with openings through which washing water can be drained, in such a manner that the resistance of the drained washing water can be measured outside the washing space (3).

8. A vessel (1) according to any one of the preceding claims 1 - 7, **characterized in that** the vessel (1) furthermore comprises a wheel house from which the vessel (1) can be navigated, in or near which wheel house a display device is present, which is capable of displaying the resistance measurement data and/for data derived therefrom.

9. A method for desalinating sand and/or another type of soil, in which the sand is washed with washing water in a washing space (3) of a vessel (1), **characterized in that** the electrical resistance of the washing water and/or of the sand/washing water mixture is measurement by means of a pair of electrodes (7), which are connected to a resistance measuring device (8).

10. A method according to claim 9, **characterized in that** an indication of the salt content of the sand is calculated on the basis of the measured value for the electrical distance, which indication is displayed.

11. A method according to claim 9 or 10, **characterized in that** the sand comprises sea sand.

12. A method according to claim 9, 10 or 11, **characterized in that** the washing water comprises sea water and/or river water.
